# EUROPÄISCHE PATENTSCHRIFT

(11) **EP 2 360 804 B1**
(45) Veröffentlichungstag und Bekanntmachung des Hinweises auf die Patenterteilung: **18.05.2016**
(21) Anmeldenummer: 09306169.5
(22) Anmeldetag: 02.12.2009
(51) Int. Cl.: H01R 4/36, H02G 15/007, H02G 15/184, H02G 15/103

(54) **Anordnung zum Verbinden von zwei Energiekabeln**
Assembly for linking two energy cables
Agencement destiné à connecter deux câbles d'énergie

(43) Veröffentlichungstag der Anmeldung: 24.08.2011
(73) Patentinhaber: Nexans, 75008 Paris (FR)
(72) Erfinder: Aue, Volker, 44137, Dortmund (DE)
(74) Vertreter: Döring, Roger

(56) Entgegenhaltungen:
- EP-A1- 0 844 687
- EP-A1- 1 158 638
- EP-A2- 1 465 312
- DE-A1- 2 432 234
- US-A- 3 864 013

## Beschreibung

Die Erfindung betrifft eine Anordnung zum elektrisch leitenden Verbinden von zwei Energiekabeln entsprechend dem Oberbegriff des Patentanspruchs 1.

Eine solche Anordnung geht aus der DE 24 32 234 A1 hervor.

Eine derartige Anordnung wird bei der Verbindung von zwei Energiekabeln, insbesondere von zwei Hochspannungskabeln - im folgenden kurz "Kabel" genannt - innerhalb einer Verbindungsmuffe eingesetzt. Die Verbindungsmuffe selbst ist in heutiger Technik üblicherweise ein vorgefertigtes Bauteil. Sie wird vor dem Verbinden der Leiter der beiden Kabel im aufgeweiteten Zustand auf eines der zu verbindenden Kabel aufgeschoben und dort "geparkt". Eine Verbindungsmuffe besteht beispielsweise aus einem Formkörper aus elastomerem Material, wie EPDM oder Silikon-Kautschuk, in den eine leitfähige Abschirmung für die Verbindungsstelle der Leiter der beiden zu verbindenden Kabel eingebettet ist. Sie kann außerdem mit einer leitfähigen äußeren Beschichtung zum Kontaktieren der äußeren Leitschichten der beiden Kabel versehen sein. In Montageposition umschließt die Verbindungsmuffe die Verbindungsstelle der beiden Leiter und die anschließenden Enden der mit einer äußeren Leitschicht versehenen Isolierungen der beiden Leiter mit Preßsitz. Eine gleichmäßige Verteilung des elektrischen Feldes im Bereich der Verbindungsstelle ist dann sichergestellt.

Bei der bekannten Anordnung nach der EP 1 158 638 B1 haben die beiden Enden des Rohres einen im Außendurchmesser reduzierten Endbereich, in dem jeweils eine nach außen offene, umlaufende Nut angebracht ist. An beiden Enden des Rohres ist in Montageposition ein als axial kurzes Rohrstück ausgebildetes, zugfestes Ankerelement angebracht, das jeweils einerseits in eine umlaufende Nut der Isolierungen der beiden Kabel und andererseits in eine der Nuten des Rohres eingreift. Seine äußere Oberfläche schließt sowohl mit dem Rohr als auch mit der jeweiligen Isolierung der beiden Kabel bündig ab. Diese Anordnung hat sich in der Praxis bewährt. Die konstruktive Lösung ist jedoch kompliziert und aufwendig.

Die eingangs erwähnte DE 24 32 234 A1 beschreibt eine Anordnung zum elektrisch leitenden Verbinden der von einer Isolierung umgebenen Leiter von zwei Energiekabeln, bei welcher über den beiden abisolierten Enden der Leiter ein elektrisch gut leitendes, rohrförmiges Verbindungselement aus Metall angeordnet ist, dessen Innendurchmesser dem Außendurchmesser der beiden Leiter entspricht und dessen Wandstärke zumindest annähernd gleich der Wandstärke der Isolierungen der beiden Leiter ist. Das Verbindungselement dieser Anordnung weist an beiden axialen Enden einen in axialer Richtung begrenzten, nach außen offenen Abschnitt mit einem gegenüber seinem Innendurchmesser erweiterten lichten Durchmesser auf. Es liegt in Montageposition mit seinen erweiterten Abschnitten auf an den Enden der Isolierungen der beiden Leiter befindlichen Auflageflächen auf, die auf einer entsprechenden Länge einen reduzierten Außendurchmesser haben.

Der Erfindung liegt die Aufgabe zugrunde, die eingangs geschilderte Anordnung im Sinne einer alternativen Verbindung des Verbindungselements mit den Leitern und den Isolierungen der Kabel weiterzuentwickeln.

Diese Aufgabe wird entsprechend den kennzeichnenden Merkmalen des Patentanspruchs 1 gelöst.

Durch die Erfindung wird eine alternative, einfache Anordnung für die Anbindung des Verbindungselements an die Isolierungen der beiden Kabel erreicht, welche die Leiter der Kabel bzw. die Kabel nicht nur elektrisch, sondern auch mechanisch stabil verbindet. Die zugfeste Verbindung zwischen rohrförmigem Verbindungselement und Isolierungen ist bei dieser Anordnung einfach ausgeführt. Es brauchen nach Befestigung des Verbindungselements an den Leitern nur noch die Fixierschrauben in die Gewindelöcher desselben eingeschraubt zu werden, bis sie ohne Überstand nach außen in die Isolierungen eingreifen. Gesondert zu montierende Befestigungselemente sind bei dieser Anordnung nicht erforderlich.

Ein Ausführungsbeispiel des Erfindungsgegenstandes ist in den Zeichnungen dargestellt.

Es zeigen:
Fig. 1 in schematischer Darstellung eine Verbindungsstelle zwischen zwei Hochspannungskabeln teilweise im Schnitt.
Fig. 2 die Anordnung nach der Erfindung teilweise im Schnitt in vergrößerter Darstellung.
Fig. 3 eine Draufsicht auf ein in der Anordnung verwendetes rohrförmiges Verbindungselement.
Fig. 4 einen Querschnitt des Verbindungselements nach Fig. 3.

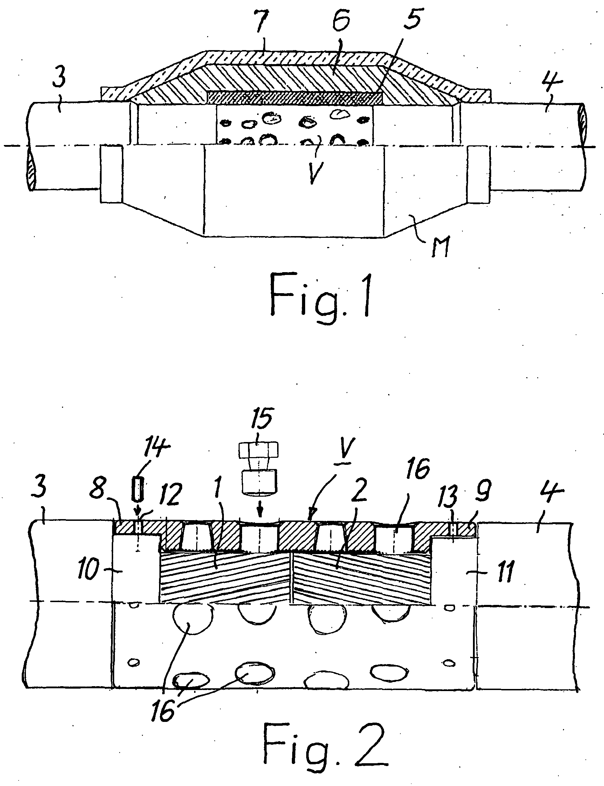

Die aus Fig. 2 ersichtlichen Leiter 1 und 2 von zwei Energiekabeln - im folgenden weiter kurz "Kabel" genannt - sind durch ein rohrförmiges metallisches Verbindungselement V elektrisch leitend miteinander verbunden, dessen genauerer Aufbau aus den Fig. 2 bis 4 hervorgeht. Von den Kabeln sind in den Fig. 1 und 2 nur deren Leiter 1 und 2 und die dieselben umgebenden Isolierungen 3 und 4 dargestellt. In der zeichnerischen Darstellung fortgelassen sind eine die Leiter 1 und 2 umgebende Leiterglättung bzw. innere Leitschicht, eine die jeweilige Isolierung 3 oder 4 umgebende äußere Leitschicht und jeweils über derselben liegende weitere Schichten der Kabel, zu denen auch ein stromtragfähiger Schirm oder Metallmantel sowie ein äußerer Mantel aus Isoliermaterial gehören.

Die Leiter 1 und 2 können mehrdrähtig oder massiv sein. Sie können rund oder segmentförmig ausgeführt sein. Sie können aus Kupfer oder Aluminium bestehen. Über der Verbindungsstelle der beiden Leiter 1 und 2 ist eine Verbindungsmuffe M angebracht, die beispielsweise als vorgefertigtes Bauteil aus einer leitfähigen Abschirmung 5, einem Formkörper 6 aus elastischem Isoliermaterial und einer leitfähigen äußeren Beschichtung 7 besteht. Die Beschichtung 7 hat bei montierter Verbindungsmuffe M elektrisch leitenden Kontakt mit den äußeren Leitschichten der beiden Isolierungen 3 und 4. Als Material für die Isolierungen 3 und 4 wird vorzugsweise vernetztes Polymethylen verwendet. Die Verbindungsmuffe M sitzt mit Preßsitz auf den von ihr umschlossenen Teilen.

Die beiden Leiter 1 und 2 sind innerhalb der in Fig. 1 dargestellten Verbindungsstelle mittels eines metallischen rohrförmigen Verbindungselements V elektrisch leitend verbunden. Das Verbindungselement V besteht aus einem Metall hoher Leitfähigkeit. Der Innendurchmesser seiner Durchgangsbohrung entspricht dem Außendurchmesser der Leiter 1 und 2. Er kann auch abgestuft sein, wenn die beiden Leiter 1 und 2 unterschiedliche Außendurchmesser haben. An den beiden axialen Enden des Verbindungselements V hat dasselbe auf einer vorgegebenen axialen Länge in Abschnitten 8 und 9 einen gegenüber dem Innendurchmesser größeren lichten Durchmesser. Der lichte Durchmesser sowie die axiale Länge der Abschnitte 8 und 9 entsprechen dem Außendurchmesser und der axialen Länge von Auflageflächen 10 und 11 der Isolierungen 3 und 4 der beiden Leiter 1 und 2. In den Abschnitten 8 und 9 des Verbindungselements V sind über dessen Umfang verteilt Gewindelöcher 12 bzw. 13 zur Aufnahme von Fixierschrauben 14 (Fig. 2) angebracht.

Zum Verbinden der beiden Leiter 1 und 2 werden zunächst alle oberhalb der äußeren Leitschicht liegenden Schichten, insbesondere der äußere Mantel, auf einer vorgegebenen Länge von den Enden der beiden Kabel entfernt. Danach werden die Isolierungen 3 und 4 mit ihren äußeren Leitschichten sowie den Leiterglättungen mit einem Radialschnitt durchtrennt und von den Leitern 1 und 2 abgezogen. Auf eines der Kabelenden wird dann die vorgefertigte Verbindungsmuffe M in aufgeweitetem Zustand aufgeschoben. Anschließend werden die Enden der Isolierungen 3 und 4 auf einer vorgegebenen Länge im Durchmesser reduziert, so daß sich die umlaufenden Auflageflächen 10 und 11 ergeben.

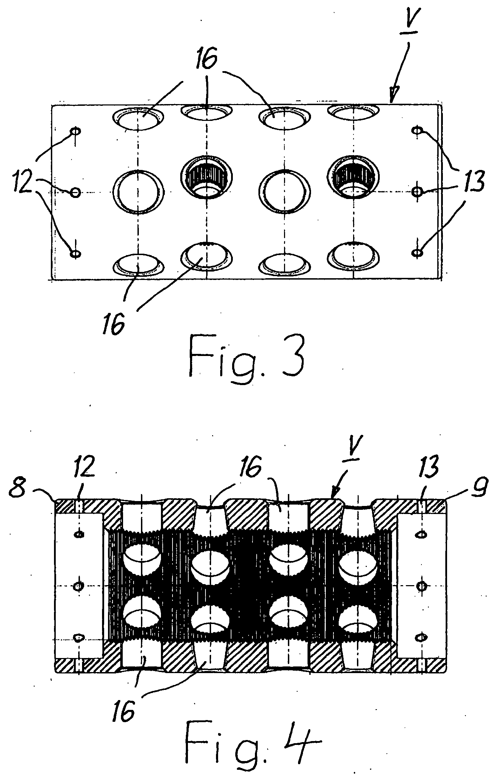

Zur Fertigstellung der Anordnung werden die Leiter 1 und 2 von zwei unterschiedlichen Seiten her in das Verbindungselement V eingesteckt, bis sich ihre Stirnseiten etwa im mittleren Bereich desselben berühren. In dieser Endposition liegen gemäß Fig. 2 die Abschnitte 8 und 9 des Verbindungselements V auf den Auflagenflächen 10 und 11 der Isolierungen 3 und 4 auf. In dieser Position wird das Verbindungselement V beispielsweise mittels Klemmschrauben 15 fest mit den Leitern 1 und 2 verbunden, die bis zur festen Anlage an den Leitern 1 und 2 in durchgehende Gewindelöcher 16 eingeschraubt werden können, von denen gemäß Fig. 3 und 4 rund um das Verbindungselement V verteilt eine größere Anzahl vorhanden ist.

Abschließend werden an beiden Enden des Verbindungselements V die Fixierschrauben 14 in die Gewindelöcher 12 und 13 eingeschraubt, die dabei in die Isolierungen 3 und 4 eindringen und dieselben fest mit dem Verbindungselement V verbinden. Die Fixierschrauben 14 werden so weit in das Verbindungselement V eingeschraubt, daß sie nicht nach außen überstehen. Sie können aus Metall oder aus Kunststoff bestehen. Über die so vorbereitete Verbindungsstelle zwischen den Leitern 1 und 2 wird abschließend die Verbindungsmuffe M geschoben, bis sie die aus Fig. 1 ersichtliche Position einnimmt.

Die Anordnung ist - wie schon erwähnt - auch dann einsetzbar, wenn die Leiter 1 und 2 unterschiedliche Durchmesser haben. Der Innendurchmesser der Durchgangsbohrung des Verbindungselements V wird dann durch Abstufung entsprechend angepaßt. Wenn die Isolierungen 3 und 4 unterschiedliche Durchmesser haben, kann eine entsprechende Stufe zum Verbindungselement V durch eine angepaßte Stufe im elastischen Formkörper 6 der Verbindungsmuffe M ausgeglichen werden. Die Auflageflächen 10 und 11 der Isolierungen 3 und 4 können dann ebenfalls unterschiedliche Durchmesser haben. Die lichten Durchmesser der Abschnitte 8 und 9 des Verbindungselements V werden entsprechend angepaßt.

Die innere Oberfläche der Durchgangsbohrung des Verbindungselements V kann zumindest in den zur Anlage an den Leitern 1 und 2 bestimmten Bereichen mit Vorteil profiliert sein, um einen verbesserten Festsitz desselben auf den Leitern 1 und 2 zu erreichen. Dazu können in der Durchgangsbohrung gemäß Fig. 4 beispielsweise quer verlaufende Rillen angebracht sein. Die Profilierung kann auch als Gewinde ausgeführt sein oder es kann auch eine Vielzahl von in radialer Richtung nach innen weisenden vorsprüngen angebracht sein.

## Patentansprüche

1. Anordnung zum elektrisch leitenden Verbinden der von einer Isolierung (3,4) umgebenen Leiter (1,2) von zwei Energiekabeln, bei welcher über den beiden abisolierten Enden der Leiter ein elektrisch gut leitendes, rohrförmiges Verbindungselements (V) aus Metall angeordnet ist, dessen Innendurchmesser dem Außendurchmesser der beiden Leiter (1,2) entspricht und dessen Wandstärke zumindest annähernd gleich der Wandstärke der Isolierungen der beiden Leiter (1,2) ist, bei welcher das Verbindungselement (V) an beiden axialen Enden einen in axialer Richtung begrenzten, nach außen offenen Abschnitt (8,9) mit einem gegenüber seinem Innendurchmesser erweiterten lichten Durchmesser aufweist und bei welchem das Verbindungselement (V) in Montageposition mit seinen erweiterten Abschnitten (8,9) auf an den Enden der Isolierungen (3,4) der beiden Leiter (1,2) befindlichen Auflageflächen (10,11) aufliegt, die auf einer entsprechenden Länge einen reduzierten Außendurchmesser haben, **dadurch gekennzeichnet,**
- **daß** das Verbindungselement (V) durchgehende Gewindelöcher (16) zur Aufnahme von Klemmschrauben (15) aufweist, mittels derer es fest mit den Leitern (1,2) verbindbar ist,
- **daß** in den beiden erweiterten Abschnitten (8,9), über den Umfang des Verbindungselements (V) verteilt, durchgehende Gewindelöcher (12,13) zur Aufnahme von Fixierschrauben (14) angebracht sind und
- **daß** das Verbindungselement (V) in Montageposition mit den Isolierungen (3,4) der beiden Leiter (1,2) mittels der Fixierschrauben (14) fest verbunden ist, welche in die Isolierungen (3,4) der beiden Leiter (1,2) hineinragen.

2. Anordnung nach Anspruch 1, **dadurch gekennzeichnet, daß** die Oberfläche der Durchgangsbohrung des Verbindungselements (V) zumindest in den zur Anlage an den Leitern (1,2) bestimmten Bereichen profiliert ist.

## Claims

1. Arrangement for the electrically conducting connection of the insulated conductors (1,2) of two energy cables, wherein an electrically conducting tube like connecting element (V) of metal is positioned around the two conductors (1,2) having bared ends, the connecting element (V) having an inner diameter which corresponds to the outer diameter of the two conductors (1,2) and the thickness of which is at least nearly the same as the thickness of the insulations of the two conductors (1,2) wherein the connecting element (V) has at its two axial ends respectively a section (8,9) with an enlarged diameter, in comparison to its inner diameter, which is limited in axial direction and open to the outside, and wherein the connecting element (V) lies in mounting position with its enlarged sections (8,9) on bearing areas (10,11) at the ends of the insulations (3,4) of the two conductors (1,2) which have a reduced outer diameter on a corresponding length, **characterized in**
- **that** the connecting element (V) has tap holes (16) for the insertion of clamping screws (15) for its connection to the conductors (1,2),
- **that** in the enlarged sections (8,9) of the connecting element (V) tap holes (12,13) for the insertion of fixing screws (14) are provided which are staggered in circumferential direction and
- **that** the connecting element (V) in mounting position is fastened to the insulations (3,4) of the two conductors (1,2) by the fixing screws (14) which penetrate into the insulations (3,4) of the two conductors (1,2).

2. Arrangement according to claim 1, **characterized in that** the surface of the throughhole of the connecting element (V) is structured at least in the areas which are provided to abut to the conductors (1,2).

## Revendications

1. Agencement pour la connexion électrique des conducteurs (1,2) entourés par une isolation (3, 4) de deux câbles d'énergie, dans lequel un élément de connexion (V) de forme tubulaire, en métal, bon conducteur de l'électricité, est disposé par-dessus les deux extrémités isolées du conducteur, son diamètre intérieur correspondant au diamètre extérieur des deux conducteurs (1,2) et son épaisseur de paroi étant au moins approximativement égale à l'épaisseur de paroi des isolations des deux conducteurs (1, 2), dans lequel l'élément de connexion (V) présente au niveau des deux extrémités axiales une portion limitée dans la direction axiale, ouverte vers l'extérieur (8, 9) avec un diamètre de dimensions intérieures élargi par rapport à son diamètre intérieur et l'élément de connexion (V), dans la position de montage, reposant avec ses portions élargies (8, 9) sur les surfaces d'appui (10, 11) situées au niveau des extrémités des isolations (3, 4) des deux conducteurs (1, 2), lesquelles surfaces d'appui présentent un diamètre extérieur réduit sur une longueur correspondante, **caractérisé en ce**
- **que** l'élément de connexion (V) présente des trous filetés traversants (16) pour recevoir des vis de serrage (15) au moyen desquelles il peut être connecté fixement aux conducteurs (1,2),
- **que** dans les deux portions élargies (8, 9) sont réalisés des trous filetés traversants (12, 13) répartis sur la périphérie de l'élément de connexion (V) pour recevoir des vis de fixation (14), et
- **que** l'élément de connexion (V), dans la position de montage, est connecté fixement aux isolations (3, 4) des deux conducteurs (1, 2) au moyen des vis de fixation (14), lesquelles pénètrent dans les isolations (3, 4) des deux conducteurs (1,2).

2. Agencement selon la revendication 1, **caractérisé en ce que** la surface de l'alésage traversant de l'élément de connexion (V) est profilée au moins dans les régions prévues pour l'application contre les conducteurs (1, 2).
